Europäisches Patentamt

**European Patent Office**

**Office européen des brevets**

(11) Publication number: **0 039 137**
A1

# (12) EUROPEAN PATENT APPLICATION

(21) Application number: 81301310.9

(22) Date of filing: 26.03.81

(51) Int. Cl.³: **C 08 G 18/16**
C 08 G 18/70, C 07 C 119/042
B 29 J 5/00

(30) Priority: 30.04.80 GB 8014171

(43) Date of publication of application:
04.11.81 Bulletin 81/44

(84) Designated Contracting States:
BE CH DE FR GB IT LI SE

(71) Applicant: IMPERIAL CHEMICAL INDUSTRIES LIMITED
Imperial Chemical House Millbank
London SW1P 3JF(GB)

(72) Inventor: Redman, Richard Paul
10 Earley Hill Road
Reading Berks, RG6 2BJ(GB)

(74) Representative: Stephenson, Kenneth et al,
Imperial Chemical Industries Limited Legal Department:
Patents Thames House North Millbank
London SW1P 4QG(GB)

(54) Isocyanate reactions.

(57) A method for the incorporation of an accelerator for a heat-induced reaction of an organic isocyanate which comprises providing the accelerator in the form of an admixture with a solid medium having a melting point below the temperature of the heat-induced reaction stage.

The method is especially useful in the manufacture of particleboard.

EP 0 039 137 A1

0039137

This invention relates to isocyanate reactions, to heat-induced reactions of organic isocyanates, and in particular to improved methods for the incorporation of an accelerator for a heat-induced reaction of an organic isocyanate.

Organic isocyanates undergo a number of heat-induced reactions which are of commercial importance. As examples may be mentioned reactions of organic isocyanates with alcohols, water, amines, acids, ureas, urethanes and phenols and reactions such as dimerisation, trimerisation, polymerisation, and carbodiimide formation. Many of these reactions conveniently take place in the presence of an accelerator which is a catalyst for the reaction concerned. However, in commercial practice there is frequently a delay between the incorporation of the accelerator and the start of the heat-induced reaction stage. The present invention seeks to reduce the adverse effects of premature reaction resulting from such a delay.

According to the present invention there is provided an improved method for the incorporation of an accelerator for a heat-induced reaction of an organic isocyanate which comprises providing the accelerator in the form of an admixture with a solid medium having a melting point below the temperature of the heat-induced reaction stage.

The present invention is of particular relevance to the use of organic isocyanates for the bonding of lignocellulosic materials to produce sheets or moulded bodies (referred to hereinafter as 'particle board'). In the manufacture of particleboard, the organic isocyanate may be applied to the lignocellulosic material as a liquid isocyanate, as a solution in an organic solvent (as described for example in United Kingdom Patent Specification No.1148016) or as an aqueous emulsion (as described for example in United Kingdom Patent Specification No.1523601). The impregnated mass of lignocellulosic material is then hot-pressed to induce reaction of the organic isocyanate with the lignocellulosic material and the water which is present, thereby consolidating the mass and forming the particle board.

In commercial mass-production of particleboard, any reduction in the duration of the process stages is of great benefit, and it is highly desirable therefore to obtain a short hot-pressing cycle. Accelerators which are catalysts for the isocyanate reactions which take place during the hot-pressing stage are well known. However, such accelerators have not hitherto found application in the manufacture of particle board because of the delays which are always encountered in practice between the application of the organic isocyanate binder to the lignocellulosic material and the start of the hot-pressing stage. Such delays may commonly be of several hours duration, and during this period premature reaction of the organic isocyanate in the presence of the accelerator may give rise to an undesirable reduction in the effective level of organic isocyanate available for bonding. Furthermore, many of the available accelerators are basic materials, and such bases are rapidly neutralised in contact with the acidic lignocellulosic material.

The present invention therefore seeks to provide a method for the incorporation of an accelerator such that the accelerator system is of low activity at normal temperatures, but is activated at the elevated temperatures encountered during the hot-pressing cycle.

According to a further aspect of the present invention, there is provided a process for the manufacture of particleboard which comprises hot pressing a mass of lignocellulosic material mixed with an organic isocyanate binder in the presence of an accelerator wherein the accelerator is in the form of an admixture with a solid medium having a melting point below the temperature of the hot-pressing stage.

The organic isocyanate may be an isocyanate conventionally used as a binder for the manufacture of particleboard. Such organic isocyanates are listed for example in United Kingdom Patent Specification No.1523601. An especially preferred organic isocyanate is the crude mixture of methylene bridged polyphenyl polyisocyanates which is generally known as "crude MDI".

The accelerator may be any catalyst which promotes the complex series of reactions which take place during the hot-pressing stage between the organic isocyanate and the lignocellulosic material in the presence of water. Such catalysts are well known (see for example "Polyurethanes, Chemistry and Technology", Part I by J.H.Saunders and K.C.Frisch published by Interscience Publishers 1962, Chapter IV). Especially preferred accelerators are amines, and especially tertiary amines, for example triethylamine and triethylenediamine ("DABCO"), and organometallic compounds, for example compounds of iron and tin such as dibutyl tin dilaurate and stannous octoate.

0039137

The solid medium having a melting point below the temperature of the hot pressing stage may be any convenient solid material which does not adversely affect the reaction of the organic isocyanate. Especially preferred is a wax material such as is commonly added during the manufacture of particle board as a sizing agent.

The accelerator may be brought into admixture with the solid material in a variety of ways, for example the accelerator may be dispersed or dissolved in a melt of the solid material (for example molten wax). This melt may be sprayed directly onto the lignocellulosic material where it solidifies to form the admixture of the accelerator and the solid medium. The weight ratio of accelerator to solid medium is suitably in the range 0.1:100 to 1:2, preferably from 1:5 to 1:20. Alternatively, the accelerator may be dispersed or dissolved in a melt of the solid material which is then formed into an aqueous dispersion in which solid particles of the admixture of the solid material and the accelerator are dispersed throughout the aqueous medium. Such dispersions suitably have a solids content of from 10 to 90%, preferably from 40 to 60%, by weight. Waxes may readily be formed into aqueous dispersions (for example from the melt), and the aqueous dispersion thus formed is especially convenient for spraying onto the lignocellulosic material.

Preferably the accelerator is soluble in a melt of the solid material, and if for example a wax is used as the solid material, preferred accelerators include dibutyl tin dilaurate and long alkyl chain tertiary amines, for example a long alkyl chain dimethyl tertiary amine. The long chain alkyl group may for example contain from 10 to 20 carbon atoms.

The hot-pressing stage of the manufacture of particleboard conventionally takes place at from 140 to 220°C.

Preferably the melting point of the solid medium (for example the wax) is from 20 to 100°C below the hot-pressing stage temperature, provided of course that the medium is solid at room temperature. In this way, the accelerator, which is wholly or partly deactivated when in admixture with the solid medium, is released during the hot-pressing stage of the particle board manufacture, thereby reducing the duration of the hot-pressing cycle.

The invention is illustrated but not limited by the following Examples in which all parts and percentages are by weight.

Example 1

An aqueous dispersion was prepared of paraffin wax in which dibutyl tin dilaurate was encapsulated. The dispersion had a solids content of 56% and the ratio of wax to dibutyl tin dilaurate was 10:1.

An emulsifiable isocyanate was prepared by reacting 3 parts of methoxy polyethylene glycol (molecular weight 650) with 97 parts of crude MDI having an NCO content of 30% and containing approximately 50% of diphenylmethane diisocyanates, the remainder being polymethylene polyphenyl polyisocyanates of higher functionality.

An aqueous emulsion was prepared by adding 102 g of the emulsifiable isocyanate to 152 g of water and emulsifying using a Silverson blender, the wax/catalyst dispersion (42 g) then being added and stirred in. The glue mix was then applied to wood furnish by spraying in a rotor blender, 1740 g of 5 mesh particle size of spruce/pine 50/50 (moisture content 2.0%) being used as the furnish. A mat was then prepared by placing a Perspex frame of internal dimensions 40.5 cm x 40.5 cm x 15 cm on to an aluminium caul plate which had been coated with release agent. The glued chips were spread in using a snowing technique so that the wood particles were deposited predominantly in the horizontal plane. On completion of the sprinkling of the particles, the uneven surface was evened out by combing with a flat piece of plastic. The mat was then prepressed by using plywood of the appropriate dimensions and hand pressing.

The Perspex frame was carefully removed and the bottom caul plate and mat were placed on the bottom platen of the preheated press (175°C) followed by a top caul plate and steel spacers (19 mm) coated with release agent. The press platens were closed over a period of 30 seconds, a ram pressure of 1000 psi being maintained (the cross sectional area of the ram being 113 square inches) for a total of 4 minutes 45 seconds i.e. 15 secs/mm. The board was then removed from the press, stacked for 24 hours prior to transfer to a constant humidity and temperature room (RH 50; temperature 23°C) and stored for 7 days prior to testing. The results of the evaluation are given in Table 1.

Example 2

The procedure of Example 1 was followed except that the press time was reduced to 3 minutes 29 seconds i.e. 11 secs/mm. The results of the evaluation are as given in Table 1.

Examples 3 and 4

The procedure of Example 2 was followed except that the wax/catalyst dispersion was replaced by the same amount of water as in the dispersion (18.5 g). On removal from the press, the board delaminated showing insufficient cure had occurred. It was necessary to increase the press time to 3 minutes 48 seconds i.e. 12 sec/mm to obtain similar physical properties to that obtained in Example 2. The results of the evaluation are as given in Table 1.

Example 5

The procedure of Example 1 was followed except that the catalyst was added to the diisocyanate. In preparation of the emulsion with water, frothing (reaction) occurred almost immediately, preventing the emulsion being applied to the wood chip via the spray technique.

The advantages of having a catalyst present in an encapsulated form and the advantages of having a catalyst present in the preparation of particle board can be seen from the above experiments, i.e.

(a) Without encapsulating the catalyst, frothing of the emulsion occurs almost immediately on preparation of the emulsion and hence the advantages of the emulsion technique (better distribution of the glue) cannot be used. (Examples 1 and 5).

(b) The catalyst increases the rate of reaction on the particle board (Examples 2, 3 and 4).

**0039137**

Du.31287

TABLE 1

| Example | 1 | 2 | 3 | 4 | 5 |
|---|---|---|---|---|---|
| Density $kgm^{-3}$ | 633 | 653 | — | 748 | Emulsion of diisocyanate/water foamed almost immediately therefore glue could not be applied to wood chip. |
| Tensile (V20) mean $kNm^{-2}$ | 995 | 1007 | Delaminated on removal from press | 1210 | |
| Standard Deviation $kNm^{-2}$ | 66 | 79 | | 216 | |
| Co-eff of variance % | 6.7 | 8.0 | | 17.9 | |
| Tensile (V100) mean $kNm^{-2}$ | 250 | 269 | | 360 | |
| Standard Deviation $kNm^{-2}$ | 18 | 38 | | 91 | |
| Co-eff of variance | 7.1 | 14 | | 25 | |
| Press Time sec/min | 15 | 11 | 11 | 12 | |

0039137
Du.31287/Eʃ

## CLAIMS

1. An improved method for the incorporation of an accelerator for a heat-induced reaction of an organic isocyanate which comprises providing the accelerator in the form of an admixture with a solid medium having a melting point below the temperature of the heat-induced reaction stage.

2. A method according to claim 1 for the manufacture of particleboard which comprises hot pressing a mass of lignocellulosic material mixed with an organic isocyanate binder in the presence of an accelerator wherein the accelerator is in the form of an admixture with a solid medium having a melting point below the temperature of the hot-pressing stage.

3. A method according to claim 2 wherein the organic isocyanate is a crude mixture of methylene bridged polyphenyl polyisocyanates.

4. A method according to any one of the prededing claims wherein the solid medium is a wax.

5. A method according to any one of the preceding claims wherein the weight ratio of accelerator to solid medium is in the range of 0.1:100 to 1:2.

6. A method according to claim 5 wherein the weight ratio of accelerator to solid medium is in the range of 1:5 to 1:20.

7. A method according to any one of the preceding claims wherein the mixture of accelerator and solid medium is in the form of an aqueous dispersion having a solid content of from 10 to 90% by weight.

8.      A method according to any one of the preceding claims wherein the accelerator is dibutyl tin dilaurate or a long alkyl chain dimethyl tertiary amine.

KS/BH
23.3.81.

**0039137**

Application number

European Patent Office

**EUROPEAN SEARCH REPORT**

EP 81 30 1310.9

| Category | Citation of document with indication, where appropriate, of relevant passages | Relevant to claim |
|---|---|---|
| | DE – A1 – 2 447 143 (MINNESOTA MINING AND MANUFACTURING) <br> * claims 1, 4; page 3, line 18 to page 4, line 9; page 9, lines 10 to 18; page 11, lines 21 to 30; page 19, lines 3 to 10 * <br> & US – A – 3 860 565 <br> -- | 1,3 |
| | GB – A – 927 004 (UNION CARBIDE) <br> * claims 1, 7, 12; page 1, line 86 to page 2, line 8 * <br> -- | 1,8 |
| A | EP – A1 – 0 004 277 (BAYER) <br> * claim 2; page 8, line 24; page 15, lines 29 to 32 * <br> -- | 1,4 |
| A | EP – A1 – 0 007 532 (BASF) <br> * claims 1, 2, 4; page 2, line 32 to page 3, line 6; page 10, example * <br> -- | 2,3 |
| A | US – A – 3 870 665 (H.-J. DIEHR et al.) <br> * claims 1, 6, 9; column 2, line 48 and lines 62 to 63 * <br> ---- | 1,3,8 |

**DOCUMENTS CONSIDERED TO·BE RELEVANT**

**CLASSIFICATION OF THE APPLICATION (Int. Cl.³)**

C 08 G  18/16
C 08 G  18/70
C 07 C  119/042
B 29 J   5/00

**TECHNICAL FIELDS SEARCHED (Int. Cl.³)**

B 29 J   5/00
C 07 C  119/00
C 08 G  18/00
C 08 L   97/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 27-07-1981. | MARX |

EPO Form 1503.1  06.78